(19) Europäisches Patentamt

European Patent Office

Office européen des brevets

(11) **EP 1 611 797 A1**

(12) **EUROPEAN PATENT APPLICATION**

(43) Date of publication:
**04.01.2006 Bulletin 2006/01**

(51) Int Cl.:
*A23L 1/0522* (2006.01)          *A23L 1/0562* (2006.01)
*A23L 1/187* (2006.01)          *A23L 1/00* (2006.01)

(21) Application number: **05076512.2**

(22) Date of filing: **01.07.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **01.07.2004   NL 1026539**

(71) Applicant: **Friesland Brands B.V.
7943 PE Meppel (NL)**

(72) Inventors:
 • **Heuvelman, Lambertus
   7462 DR Rijssen (NL)**
 • **Rasing, Gerardus Ferdinandus Johannes
   6702 AD Wageningen (NL)**

(74) Representative: **Winckels, Johannes Hubertus F.
et al
Vereenigde,
Johan de Wittlaan 7
2517 JR Den Haag (NL)**

(54) **Pourable acid products**

(57)      The invention relates to a method for manufacturing a product comprising 0.5-6 wt.% of modified starch and 0.25-3.0 wt.% of gel-forming compound, wherein a first aqueous solution is obtained comprising a non-gelling gel-forming compound and a modified starch homogeneously distributed therein, in which solution substantially no starch granules or parts of starch granules of this modified starch are visible in a microscopic assessment and a product comprising a modified starch and a gel-forming compound, in which product substantially no starch granules or parts of starch granules of this modified starch are visible in a microscopic assessment.

**Description**

The invention relates to a method for manufacturing a product comprising 0.5-6 wt.% of modified starch and 0.25-3.0 wt.% of gel-forming compound, and particularly a gelling polysaccharide, wherein a first aqueous solution is obtained comprising a non-gelling gel-forming compound and a modified starch homogeneously distributed therein, in which solution substantially no starch granules or parts of starch granules of this modified starch are visible in a microscopic assessment, and a product comprising 0.5-6 wt.% of modified starch and 0.25 wt.% of gel-forming compound, in which product substantially no starch granules or parts of starch granules are visible in microscopic assessment.

Recently, a number of new products have been developed which contain a gel-forming compound and modified starch. The method for preparing this product and the product itself are described in non-prior published prior art.

The non-prior published Dutch patent application 1023537 and the corresponding European application 1 481 591 of the inventors, relating to foods containing gelatin and starch, describe a method for the preparation thereof, and products obtained with the method. The foods referred to herein have a structure which is non-gelled, yet is viscous. In addition, it appears that the visual thickness of this structure is settable independently from the thickness in the mouth. It has been found that products having such structures can be obtained by using as a thickener a combination of gelatin and modified starch. To this end, after gelatinizing of the starch, the modified starch is subjected to such a treatment under shear forces that the starch granules present are thereby substantially broken. After cooling, and particularly after flow-cooling, the product is usually subjected to a temperature lower than 20°C and more preferably lower than 15°C and subjected to a stirring treatment for at least half an hour. However, as observed by the inventors, with the method of preparation described in the Dutch patent application, problems occur when an acid product is intended which is pourable. The gel-forming compound then forms a gel, which is also preserved after, for instance, whipping.

It has now surprisingly been found that an acid product can be obtained which is both pourable and yields a pleasant, non-sticky mouthfeel. This product can be obtained by carrying out the method according to the invention as will be further elaborated later on in this specification.

EP-A-0 777 969 further describes aerated acid foods and a method for preparing such products. It relates to stable pourable acid foods with long-life properties. These have a gas bubble content such that a whipping percentage of at least 25% is obtained. It also relates to a method for manufacturing such products. It further relates to the use of a thickening system which comprises modified starch and which system is active in acid conditions and is added to the product. The thickening system undergoes a treatment whereby the modified starch globules are substantially formed into microscopically non-visible particles. The purpose of this is to obtain a well whippable product. Further, the addition of 0.01-0.5% and preferably 0.07-0.3% of gelatin is also mentioned, but it is explicitly stated that the gelatin does not form a gel yet during packaging; however, in the package, the gelatin contributes to the yield stress. This means that the gelatin gels.

The amount of starch which is used according to the European patent application in order to make a viscous whipped acid dessert yields a sticky or slimy mouthfeel in the method described therein. When more gelatin is used, a product is obtained which gels and is non-pourable.

The acidity of these known products is set by fermentation.

A further drawback of these products is that the acid-forming bacteria used therein form exopolysaccharides (EPS). These saccharides contribute to getting a slimy mouthfeel, which is not desired.

More in general, in acidifying products by fermentation, usually use is made of cultures which produce relatively many exopolysaccharides (EPS). It is true that EPS contributes to a texture which is thick and solid, and is *inter alia* characteristic of yoghurt, but it also causes a slimy mouthfeel, which is less desired for the products intended according to the invention.

If a non-EPS-forming culture is used, as in the case of buttermilk, a thin structure is obtained. It is true that this is not slimy, but it does not have the desired fluffy structure of yoghurt either.

In the method according to the present invention, both cultures which are normally used for preparing (slimy) yoghurt and non-slime-forming cultures can be used. Using the method according to the invention has the advantage that the desired characteristics are obtained, such as viscosity and solidity, without these at the same time being associated with less desired other characteristics such as the slimy and/or heavy mouthfeel. In this method in which the product is subjected to shear forces during mixing and cooling, no or hardly any slime-forming action of EPS is left in the end product.

Further, many acid products are known, including many acid foods. Of these, yoghurt is the best-known acid dessert or product. The yoghurt can either have a pourable structure (stirred yoghurt) or a scoopable structure (set yoghurt). Further, reference is made to Applicant's European patent application with application number 04076376.5 as filed on May 7, 2004, the priority application of the international patent application with application number PCT/NL2005/000345 in which dairy products are described which have properties of mixtures of dairy products, such as mixtures of yoghurt and cottage cheese.

In addition, a large range of thickened products is known, including many desserts. Usually, these products are thickened by use of starch and/or gelatin. Starch may have a natural origin or may be physically or chemically modified. Depending on the use and the conditions of use, a suitable starch can thus be chosen. An important category in this are thickened products prepared from a liquid, and particularly thickened dairy products and dessert products. Such foods and particularly such dairy and dessert products have either a gel structure or the structure of a viscous liquid.

For instance, US-A 3,359,116 describes methods for preparing sour cream. In this preparation, 0.12-3 wt.% of starch and 0.05-1 wt.% of a colloid, for instance gelatin, can be added to milk. To this mixture, acid can be added, thereby obtaining a product having a pH of 4-4.9.

GB-A-1 476 309 describes sour cream-like toppings for which fermented milk products are the starting materials. In these products, stabilizers are used, according to the Examples in amounts equal to or less than 0.19%, while as a stabilizer for instance starch or for instance gelatin can be used.

In US-A-4,312,891, a storage-stable dessert product is described with 0.4-0.7 wt.% of gelatin and 0.4-2 wt.% of starch therein. The product is acidified.

WO-A-81/02397 relates to a storage-stable liquid dessert product with a reversible gel structure. This product is prepared from an aqueous mixture of starch and gelatin, of which the pH is lowered to below 4.6.

Further, reference is made to WO-A-86/03377, in which a method is described in which a stabilizer of soymilk is added. Therein, acid is added. As examples of stabilizers *inter alia* starch and gelatin are mentioned.

FR-A-2 346 986 relates to the preparation of products with pre-gelatinized starch.

An important characteristic in the use of thickeners is that the product needs to look attractive to consumers. This appearance is *inter alia* determined by the viscosity of the product. A possibly even more important characteristic is that the product needs to have a pleasant mouthfeel. This mouthfeel is *inter alia* determined by the viscosity, but also by the extent to which and the rate at which products fall apart in the mouth. As is well known, these characteristics interact with the taste perception of consumers. Products which fall apart easily make the taste components available quickly and to a great extent, so that the taste of the product comes out well.

A gel structure is obtained by using a gel-forming compound; typically, this is gelatin or a gelling polysaccharide. Organ oleptically, gelatin yields excellent structures, which structures are, however, only suitable for gel-like foods. A gelatin-based gel has the advantage that this gel melts in the mouth, while, for instance, gels based on carrageens or many other gums do not do this or do this to a much lesser extent. The melting of the gel structure plays an important role in the mouthfeel but has other advantages as well. For instance, with non-melting gels, the aromas, both components providing smell and taste, are less quickly perceived. In addition, a non-melting gel usually, if not always, causes a crumbly mouthfeel, which appeals less to many consumers.

A viscous structure is generally prepared starting from starch, while more and more use is made of modified starches. Conventional modified starches are well resistant to the high temperatures and shear forces which a product containing such starches experiences in modern processing equipment. A drawback of viscous structures which conventional modified starches contain in acid conditions is that, with the desired visual thickness, the mouthfeel is always rather viscous, or "heavy". In other words, the visual thickness and the thickness in the mouth are always related with viscous structures based on starches and particularly on modified starches.

The acid product according to the invention has the advantage that conventional additives have little adverse effect on the structure of the product. This allows the addition of a broad selection of additives in a relatively large range of contents, compared with conventional products.

Further, these pourable acid products can well be processed further. For instance, a stable foam can simply be obtained by whipping the product. This means that aerated products, such as desserts, can be formed from these products.

In addition, the thickened structures formed are well resistant to further processing and/or transport. The structure of these products cannot easily be disturbed in a negative way. This means that further processing and/or transport can be carried out less cautiously, while the structure is spared. In general, this means that further processing is less costly than in the case of similar less stable products.

It is conventional to use starch and/or a gel-forming compound in acid products. If starch is used in a high dose, a mushy structure is created. This is felt as being too thick in the mouth. Further, this starch addition can even result in a rough, almost gritty or sandy structure, which is obviously less desired. With the present invention, this drawback does not occur or at least hardly occurs.

A gel-forming compound can conventionally be added in a low dose to support the appearance of the products. But, with doses of about 0.3% or more, then unacceptable gel formation occurs. The present products are pourable, however, and moreover have the pleasant mouthfeel of a melting structure.

If, as already said, a gel-forming compound is used with conventional products in a higher dose, such as equal to or more than 0.5 up to 2.0%, then this results in a gelled product. This structure is perceived as being pleasant in the mouth.

Where percentages are given in the specification, weight percentages are meant, unless stated otherwise.

In a first aspect, the present invention relates to a method for manufacturing a product comprising 0.5-6 wt.%

of modified starch and 0.25-3.0 wt.% of gel-forming compound, which method comprises the following steps: preparing a first non-acid, non-gelling aqueous solution comprising a gel-forming compound and a modified starch homogeneously distributed therein, in which solution substantially no starch granules or parts of starch granules of this modified starch are visible in a microscopic assessment; preparing a second aqueous solution, which is acid, and mixing that first and that second solution, while the pH of the second solution is set such that a product is obtained with a final pH of less than 5.2.

In a second aspect, the invention relates to a product comprising 0.5-6 wt.% of modified starch and 0.25-3.0 wt.% of gel-forming compound, in which substantially no starch granules or parts of starch granules of this modified starch are visible in a microscopic assessment, which product is non-gelled and is pourable, and further has a pH of less than 5.2. Preferably, this product is obtainable according to the method according to the invention.

In a preferred embodiment, the product comprises 1-3 wt.% of modified starch, more preferably 1.1-2.5 wt.% of modified starch.

The first solution required in the method according to the invention is not acid. This means that, in the preparation of this solution, the acidity is not less than 5.2, preferably not less than 5.5, and more preferably more than pH 5.5, for instance more than 6.0.

The second solution is always acid before it is added to the first solution, and so acid that, after mixing with the first solution, a pH is created which is less than 5.2, more preferably less than 4.8. Usually, after mixing, the pH will not become less than 3.5 and more preferably not less than 3.7 for reasons of taste or because of preferences. The preferred range for the pH after mixing is the pH range between 4.0 and 4.6.

The second solution can be made acid by acidifying with a food-technically acceptable organic or mineral acid, by adding glucono-δ-lactone and/or by fermentation.

Both the first and the second solution can be based on water, on milk products, on soymilk or a different vegetable milk composition, on fruit juice, on vegetable juice and/or broth. The second aqueous solution is preferably based on fruit juice and/or fermented milk products, in particular on cottage cheese, yoghurt and buttermilk.

If the first solution is based on, for instance, fruit juice, the pH of that solution does need to be more than 5.2, and more preferably more than 5.5.

When a product is prepared which contains protein, that protein is preferably present in the second solution, since otherwise gel formation often occurs anyway. In the first solution, usually less than 1 wt.% of milk protein will be present.

In the product according to the invention and in the method according to the invention, a gel-forming compound is used. In general, this will be a gelling polysaccharide, such as agar, τ-carrageen, κ-carrageen, alginate and gellan. Preferably, however, gelatin is used, particularly because of the melting behavior thereof in the mouth.

Mixing the first and second solutions is carried out at a temperature lower than 20°C and more preferably lower than 15°C. The product is subjected to a stirring treatment of at least half an hour.

The term "modified starch" is herein understood to mean a starch which has been modified in a chemical or physical manner. Such modifications increase the applicability of these starches. These are for instance particularly suitable for use with elevated temperatures and larger shear forces and in acid environments, such as they are for instance used in the production of milk-based desserts. Suitable modified starches can be chosen from the group comprising H-modification (adipate-acetate; E1422) or R-modification (hydroxypropyl phosphate; E1442), modification of (waxy) maize, tapioca starch, rice starch, potato starch and physically modified starch, and the above-mentioned types of starch in instant form. Suitable commercial products are for instance Clearam CR30, Clearam CH30, Clearam CH3010 (all ex Roquette Freres, France); Amylum E2 (ex Amylum); C*Tex 06203 (ex Cerestar); Purity VL and National Frigex (both ex National Starch); and Novation 2300 and Novation 2600 (both physical modified starch ex National Starch). Incidentally, the chemically modified starches are preferred. The product obtained according to the method according to the present invention comprises 0.5-6% of modified starch, preferably 1.0-4% and most preferably 1.5-3.5%.

The term "gel-forming compound" is herein understood to mean a compound which is able to form gels in normal conditions. Preferably suitable are gels which fall part at elevated temperatures, such as body temperature, particularly the temperature in the mouth. At a low temperature, such as the storage or consumption temperature, the gel-forming compound will contribute to the enhancement of the viscosity. Typically, many of the conventional gel-forming compounds can hardly be used in an acid environment and are therefore less desired. Suitable gel-forming compounds according to the invention are for instance gelatins coming from cowhides, bones, pork rind. These gelatins can be prepared according to either an acid or a lime treatment. The gelatins preferably have a Bloom number of 80-300, more preferably of 100-300 and most preferably of 150-300. The product obtained according to the method according to the present invention comprises 0.25-3.0% of gel-forming compound, preferably 0.5-2.0%, more preferably between 0.55 and 1.9% and most preferably 0.75-1.5%.

The term "non-gelling" is herein understood to mean that a substantially homogeneous structure is created which contains no visible disturbances, such as variations in density and/or texture. Further, in large part, the gel formation does not take place. No macroscopic gel structures have been formed. These can still be present at a microscopic level. In this manner, still a contribution to the appearance and the viscosity can be obtained.

The term "gelatinizing" is herein understood to mean a method in which starch granules swell under heating and take up much water during this. The obtained solution than has an elevated viscosity.

The term "homogenizing" is herein understood to mean the processing of a mixture such that the components present are substantially homogeneously distributed in the mixture. Examples of suitable homogenization techniques according to the invention are using shear forces, microfluidizing and ultrasound treatment. Applying shear forces preferably takes place with a homogenizer at a pressure of 5 to 200 bar. The first solution is preferably homogenized at a pressure of 5-100 bar, while the second solution is preferably homogenized at a pressure of 50-200 bar. A suitable homogenizer is for instance the one of the brand Ranny. The homogenization may further be carried out in one or more steps. The purpose of the homogenization of the second solution may be to disperse the fat to an emulsion and to provide an optionally present emulsifier on the fat surface.

The term "granule structure" herein refers to a structure which is inherently obtained if a starch is gelatinized. This structure is not homogeneous on a microscopic scale. Under a light microscope, these structures are observed, which resemble granules. The microscope magnification used for this purpose is 100x (10x objective and 10 ocular).

The first solution according to the method according to the present invention, which solution comprises modified starch in the presence of gel-forming compound, may for instance be obtained as follows. In the solution, the modified starch is gelatinized. This gelatinization can take place in a conventional manner, for instance by heating the solution containing this starch. This results in a modified starch which initially has a granule structure. This granule structure is then broken, such that substantially no starch granules or parts of starch granules are visible in a microscopic assessment. A suitable manner for this purpose is using a homogenizer at a pressure of 5-150 bar. A suitable manner for obtaining a stable product is to subsequently stir the solution with broken gelatinized modified starch for at least half an hour at a low temperature. Stirring is preferably done between 1 and 8 hours at a temperature of 2-15°C. Here, it is important that the product is just completely in motion. The use of a high-speed stirring apparatus is less suitable for this step.

The term "acid product" or the adjective "acid" is herein understood to mean a product having a pH of less than 5.2, preferably in the range of 3.7 to 5.2. Products having a pH of less than 3 are generally perceived as being too sour by consumers. Products having a pH of more than 5.2 are perceived as not being fresh (in the mouth).

The term "acid-forming culture" is herein understood mean cultures which are suitable for the fermentation, in particular of milk, with formation of an acid. Examples thereof are *Lactobacillus bulgaricus, Streptococcus thermophilus, Lactobacillus delbrueckii* spp. *bulgaricus, Lactococcus lactis* spp. *lactis, Leuconostoc* and *Lactococcus lactis* spp. *cremoris* or other cultures used for the preparation of acidified milk products such as yoghurt, buttermilk or cottage cheese. In general, the cultures are added after the second solution has been brought to the desired temperature. Usually, then other additions are already present in this solution. The temperature and fermentation time are chosen such that they are optimal for the culture used. The culture can continue to ferment until the desired pH has been reached. Then the fermentation is stopped by lowering the temperature.

The term "mixing" refers to a method which intends to make a mixture substantially homogeneous on a macroscopic scale. Here, either the first solution can be added to the second one or the other way around, or both solutions can simultaneously be added to a mixing vessel. Suitable techniques are for instance stirring, using a static mixer or circulating pumping.

The term "setting" refers to a method in which the amounts of acid of the second solution are chosen such that the amount of acid of the product is finally in the desired range. Here, the amounts of the first and second solutions are important, as well as the concentrations of acid and/or base and/or buffer present, as is obvious to a skilled person.

The acid product obtained with the method according to the invention is pourable and further has a pleasant, non-sticky mouthfeel.

Further, this acid product has the advantage that conventional additives have little adverse effect on the structure of the product. This allows the addition of a broad selection of additives in a relatively large range of contents, compared to conventional products.

Surprisingly, these pourable acid products can well be processed further. For instance, a stable foam can simply be obtained by whipping the product.

As the aqueous solvent, a choice can be made from water, solutions based on milk products or milk components, soymilk, fruit juices, vegetable juices, broth. Thus, in a simple manner, a large variety of pourable acid products can be obtained, which can simply be processed or treated further. For instance, when fruit juice is used as a basis for the first solution, a product can be created which is 50% based on fruit juice. Broth yields a savory acid dessert or a sauce.

In a further embodiment, the present invention relates to a method in which, further, the first aqueous solution comprises one or more components chosen from fat, vitamin, emulsifier, preservative, filler, sugar, sweetener, food acid, dry milk-based components, fruit components, vegetable components, salt, colorings, flavorings, aromas, cacao, chocolate, minerals or a combination thereof. If fat is present, fat is preferably present in a concentration of 0.1-25 wt.%. If dry milk-based components in the form of protein are present, this protein is preferably present in the concentration of up to 1 wt.%.

In a further embodiment, the present invention relates to a method in which, further, the second aqueous solution comprises one or more components chosen from fat, vitamin, emulsifier, preservative, filler, sugar, sweetener, dry milk-based components, fruit components, vegetable components, food acids, bacterial cultures, glucono-δ-lactone, salt, colorings, flavorings, aromas, cacao, chocolate, minerals or a combination thereof. If fat is present, fat is preferably present in a concentration of 0.1-25 wt.%. If dry milk-based components in the form of protein are present, this protein is preferably present in the concentration of up to 0.5-12 wt.%.

In a second embodiment, the present invention relates to a product comprising 0.5-6 wt.% of modified starch and 0.25-3.0 wt.% of gel-forming compound, in which substantially no starch granules or parts of starch granules of this modified starch are visible in a microscopic assessment, characterized in that the product has a pH of less than 5.2. Such a product is for instance obtainable according to the method according to the present invention.

The product preferably has a pH of between 3.0 and 5.2. Products having a lower pH are generally perceived as being too sour, while products having a higher pH are no longer perceived as being fresh in the mouth.

In another embodiment, the present invention relates to a product, where the product has a whipping percentage of 10-200%.

The term "whipping percentage" is understood to mean

$$\left[ \ \frac{(\text{density of the non-whipped product})}{(\text{density of the whipped product})} \ - 1 \ \right] \ x \ 100\%$$

Such products have a light, fresh sour taste and a pleasant mouthfeel, which is the result of the at least partial melting of thickeners in the mouth. The product is pourable and non-gelled, while the foam formed is stable. The product according to the invention can be whipped without any problems, whereas EPS-based structures, for instance EPS-containing yoghurt, become very thin upon whipping while the foam formed is not stable with these EPS-containing products. In addition, the mouthfeel is not or much less slimy than that of existing products based on starch or other hydrocolloids providing viscosity.

In a further embodiment, the present invention relates to a product where the end product obtained has a viscosity of 1 up to 50 Pa.s, preferably of 2 to 35 Pa.s. The term "viscosity" is understood to mean the viscosity as determined with a Rheometrics type DSR apparatus. Here, a plate geometry was used with a diameter of 40 mm. With a thermostatic bath, the measuring system of the rheometer was set at a temperature of 10°C. The viscosity has been determined at different shear rates, in the sense that a viscosity curve is recorded in which the shear rate is slowly increased up to a value of more than 100 sec$^{-1}$, after which the viscosity is calculated which corresponds with a specific shear rate. When nothing is stated, the shear rate at 10 sec$^{-1}$ is meant.

Products having such a viscosity are well pourable and have a pleasant mouthfeel. In addition, these products are suitable for further processing, such as whipping, or adding additives.

In a further embodiment, the present invention relates to a product where the obtained end product has a solidity in grams of 15-200 grams, most preferably between 20 and 150 grams.

The term "solidity" is understood to mean the solidity measured with a Stevens Texture Analyser at a temperature of 5°C. To this end, the product was filled into a plastic cup of 200 ml. The diameter of the measuring body used is 2.54 cm, the penetration depth 20 mm and the penetration rate 1 mm/s. The solidity is the force which the measuring body experiences after it has penetrated 20 mm into the product.

A product with such a solidity has a pleasant appearance, is well pourable, but not too solid and has a pleasant mouthfeel.

In another embodiment, the present invention relates to a product, where the product further comprises one or more components chosen from fat, vitamin, emulsifier, preservative, filler, sugar, sweetener, dry milk-based component, fruit component, vegetable components, salt, coloring, flavoring, aroma, cacao, chocolate, minerals or a combination thereof and/or comprises an aqueous solution as a basis, which can be chosen from water, solutions based on milk products, soymilk, fruit juices, vegetable juices and broth.

If applicable, the final product contains 0.1-25% of fat, preferably 0.25-10% of fat and more preferably 0.5-5%, and contains 0.5-12% of protein, preferably 0.5-5% of protein and more preferably 1-4%.

In a next embodiment, the present invention relates to a dessert, a concentrated fruit or vegetable juice product or a soymilk-based product. Such products have sufficient structure and solidity with relatively low protein contents, while the reduction of the protein content does not result in a sticky, viscous structure as a result of thickeners, as it does occur in the prior art. Further, these products are whippable and non-gelled.

If the food is a dessert, it is usually based on milk and/or milk products. Examples of such desserts are products based on yoghurt, on cottage cheese, on buttermilk, and on fresh cream cheese, or "frischkäse".

By adding further substances, taste, color, composition, nutritional value, and caloric value can be varied as desired. The variety of additives and the amounts used are similar to those of other conventional products, such as foods, and particularly desserts. However, in the case of the products according to the present invention, there are less or no restrictions, depending on the additive used. These variations are within the reach of a skilled person, who will appreciate these.

The additives can be added before filling the product obtained according to the present invention. This applies to both a whipped and a non-whipped product. A conventional use is to add these additives in the form of viscous preparations. These viscous preparations usually contain starch. Therefore they can also contains whole starch granules or parts of starch granules. However, these starch granules or parts thereof hardly disturb the obtained structure of the product according to the invention. Therefore they are well usable in the products obtained according to the invention.

Suitable emulsifiers for use in the invention are, for instance, mono and diglycerides of fatty acids, lactic acid esters of mono and diglycerides, such as E472b, sugar esters, and the like. These emulsifiers can further improve the whippability of the products obtained according to the invention.

Food acids for use in the invention are for instance citric acid, lactic acid and acetic acid. The pH can also be reduced with glucono-δ-lactone.

Suitable cultures for the fermentation of milk are for instance *Lactobacillus bulgaricus, Streptococcus thermophilus, Lactobacillus delbrueckkii* spp. *bulgaricus, Lactococcus lactis* spp. *lactis, Leucorcostoc,* and *Lactococcus lactis* spp. *cremoris* or other cultures which are used for the preparation of acidified milk products such as buttermilk, yoghurt or cottage cheese. In general, the cultures are added after the solution has been brought to the desired temperature. Usually, other additions are then already present in this solution. The temperature is chosen such that it is optimal for the culture used. The culture can continue to ferment until the desired pH has been reached. Then the fermentation is stopped by lowering the temperature.

Other additions for use in the invention are for instance aromas, colorings, fruit components, vegetable components, salts, sweeteners, sugars, flavorings, cacao, chocolate, etc.

Milk products for use in the invention are for instance whole milk, semi-skimmed milk, skimmed milk, cream, whey, ultrafiltrated whey and whey protein, whey and milk permeate, caseinate, lactose.

Suitable sugars and sweeteners for use in the invention are for instance saccharose, glucose, glucose syrups, maltodextrins, intensive sweeteners and artificial sweeteners such as saccharin.

Suitable fats for use in the invention are fats on a vegetable basis, such as hard coconut oil, soy oil, palm kernel oil. Animal fats, such as milk fat, are suitable as well.

Suitable liquids for dissolving the components are for instance water, solutions based on milk products, soymilk, fruit juices, broth and the like.

The products obtained according to the present invention will keep for at least 3 weeks in cold storage. During this period, for the consumer, the viscosity does not change substantially. Any gas bubbles present slightly increase in size, from hardly visible to just visible. This indicates a time-stable product.

Now the present invention will be described further with reference to the following non-limitative examples. When percentages are stated, these are always weight percentages based on the weight of the total composition.

Example 1.

In this example, the following products have been tested, which have been prepared as follows.

| Solution 1 | 1 | 2 | 3 |
|---|---|---|---|
| Permeate | 40.9 | 40.2 | 41.6 |
| Maltodextrin DE 20 | 2.0 | 2.0 | 2.0 |
| modified waxy maize starch (E1422) | 2.5 | 3.0 | 2.0 |
| Gelatin 160 bloom | 1.1 | 1.3 | 0.9 |
| Sugar | 3.5 | 3.5 | 3.5 |
| | | | |
| Solution 2 | | | |
| Milk 8.7% fat | 46.1 | 46.1 | 46.1 |
| Emulsifier lactic acid ester of saturated mono and diglycerides (E472b) | 0.4 | 0.4 | 0.4 |
| Sugar | 3.5 | 3.5 | 3.5 |

Maltodextrin, modified waxy maize starch (E1422), gelatin and sugar were added to a milk permeate solution with stirring. The product was heated for 10 seconds at a temperature of 125°C. For this purpose, a Sterilab direct-heating apparatus was used. After cooling in a cooler, the product was homogenized in-line at 70°C at a pressure of 75 bar. Then the product was cooled down to 10°C and stirred for 4 hours. When stirring did not take place, a solid, gelled phase was created.

To the second milk solution, lactic acid ester of saturated mono and diglycerides (E472b) and sugar were added with stirring. The product was heated for 10 seconds at a temperature of 125°C. For this purpose, a Sterilab direct-heating apparatus was used. After cooling in a cooler, the product was homogenized at 70°C at a pressure of 75 bar and then cooled down to 35°C. At this temperature, a conventional mesophilic yoghurt lactic acid was inoculated, and after fermentation, a desired pH of 4.2 was reached, after which the product was flow-cooled to 7°C.

Then, the first and the second solution were mixed. For this purpose, a slowly rotating stirring apparatus was used in order to obtain a homogeneous mixture.

Finally, the products were whipped to a whipping percentage of 25% with the aid of a Mondo® mixer. Then the products were filled.

Of the formed products, the solidity and viscosity were determined. The viscosity was calculated for a shear rate of 10 sec$^{-1}$ according to the method described in the specification. The results of the measurements are in the table below.

| Product | 1 | 2 | 3 |
|---|---|---|---|
| Solidity (g) | 41 | 45 | 29 |
| Viscosity at 10°C (Pa.s) | 6.2 | 8.7 | 3.8 |

These products were assessed further.

They were characterized as non-gelled. The gas bubbles in the products were finely distributed and hardly visible with the naked eye.

The products had a pleasant and non-sticky mouthfeel. The taste was fresh sour and creamy.

Measurements show that the solidity of the products is very low, which indicates a non-gelled product.

Example 2

A cottage dessert with the following composition was tested:

Solution 1

| Permeate | 40.9 % |
|---|---|
| Maltodextrin DE 20 | 2.0 % |
| Modified waxy maize starch (E1422) | 2.5 % |
| Gelatin 160 Bloom | 1.1 % |
| Sugar | 3.5 % |

Solution 2

| Cottage cheese | 46.5 % |
|---|---|
| Sugar | 3.5 % |

The percentages stated here are based on the weight of the end product.

The products were prepared as follows:

Solution 1 was prepared as described in Example 1.
Solution 2 was made by adding sugar to the cottage cheese with stirring.

Then the solutions 1 and 2 were mixed with gentle stirring to obtain a homogeneous mixture.

A part of this product was then filled (non-whipped); another part was whipped with the aid of a Mondomix (continuous whipping apparatus) to an overrun of 30%.

Of the products, the solidity and the viscosity were measured. This viscosity was determined at 10°C and a shear rate of 10 sec$^{-1}$. The results of these measurements are in the following table:

|  | Non-whipped | Whipped |
|---|---|---|
| Solidity (g) | 111 | 65 |
| Viscosity at 10°C (Pa.s) | 26 | 8.7 |

These products had a very thick, liquid structure but were non-gelled.

The non-whipped product has a very thick mouthfeel; the mouthfeel of the whipped product is lighter.

In the whipped product, small gas bubbles were visible. Between fresh and storage for 2 weeks at 5°C, the gas bubbles do not considerably change in size.

Example 3

A buttermilk dessert with the following composition was tested:

Solution 1

| Permeate | 40.9 % |
|---|---|
| Maltodextrin DE 20 | 2.0 % |
| Modified waxy maize starch (E1422) | 2.5 % |
| Gelatin 160 Bloom | 1.1 % |
| Sugar | 3.5 % |

Solution 2

| Buttermilk | 46.5 % |
|---|---|
| Sugar | 3.5 % |

The percentages stated here relate to the weight of the end product.

The products were prepared as follows:

Solution 1 was prepared as described in Example 1.

Solution 2 was made by adding sugar to the buttermilk with stirring.

Then the solutions 1 and 2 were mixed with gentle stirring. The pH of this mixture was measured and set at a value of 4.2 with the aid of lactic acid. A part of this mixture was directly filled (non-whipped product); another part was whipped with the aid of the Mondomix to an overrun of 25% and then filled (whipped product).

The analysis data of these samples are stated in the following table. The viscosity was measured at a temperature of 10°C and a shear rate of 10 sec$^{-1}$.

|  | Non-whipped | Whipped |
|---|---|---|
| Solidity (g) | 26 | 31 |
| Viscosity at 10°C (Pa.s) | 3.6 | 3.2 |

The structure of these products was described as: smooth, pourable viscosity like (thin) custard; the taste as a pleasant buttermilk taste. The air bubbles were clearly visible in the whipped variant. In all, both the non-whipped and the whipped product became a new buttermilk dessert.

**Claims**

1. A method for manufacturing a product comprising 0.5-6 wt.% of modified starch and 0.25-3.0 wt.% of gel-forming compound, comprising 0.5-6 wt.% of modified starch and 0.25-3.0 wt.% of gel-forming compound, comprising obtaining a first, non-acid, non-gelling aqueous solution comprising a gel-forming compound and a modified starch homogeneously distributed therein, in which solution substantially no starch granules or parts of starch granules of this modified starch are visible in a microscopic assessment, **characterized in that** further a second aqueous solution is prepared which is acid, and that the first and the second solutions are mixed, wherein the pH of the second solution is set such that a product is obtained with a final pH of less than 5.2.

2. A method according to claim 1, wherein, as first aqueous solution, a solution is used with a pH of more than 5.5.

3. A method according to claim 1 or 2, wherein the first and/or second aqueous solution is based on water, on milk products, on soymilk, on fruit juice, on vegetable juice and/or on broth.

4. A method according to any one of the preceding claims, wherein the second aqueous solution is based on fruit juice and/or fermented milk products, in particular on cottage cheese, yoghurt and/or buttermilk.

5. A method according to any one of the preceding claims, wherein, as a gel-forming compound, gelatin is used.

6. A product comprising 0.5-6 wt.% of modified starch and 0.25-3.0 wt.% of gel-forming compound, wherein substantially no starch granules or parts of starch granules are visible in microscopic assessment, which product is not gelled and is pourable, **characterized in that** the product has a pH of less than 5.2.

7. A product according to claim 6, obtainable according to the method of any one of claims 1-5.

8. A product according to any one of claims 6 and 7, wherein the product has a pH of 3.0 to 5.2; more preferably of 3.5 to 5.2 and most preferably of 3.8 to 4.8.

9. A product according to any one of claims 6-8, wherein the product is whipped and has a whipping percentage of 10-150%, and preferably 20-100%.

10. A product according to any one of claims 6-9, wherein the obtained end product has a viscosity in the range of 1-150 Pa.s.

11. A product according to any one of claims 6-10, wherein the obtained end product has a solidity of 15-200 grams.

12. A product according to any one of claims 6-11, wherein the product is a dessert.

13. A product according to any one of claims 6-12, wherein the dessert is based on milk and/or milk products.

**European Patent Office**

**EUROPEAN SEARCH REPORT**

Application Number

EP 05 07 6512

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | EP 0 777 969 A (VERENIGDE COOEPERATIEVE MELKINDUSTRIE COBERCO B.A; FRIESLAND BRANDS B.) 11 June 1997 (1997-06-11) | 6-13 | A23L1/0522 A23L1/0562 A23L1/187 A23L1/00 |
| A | * claims 1-3,6-10; examples 1-6 * | 1-5 | |
| D,X | WO 86/03377 A (AZUMAYA, INC) 19 June 1986 (1986-06-19) * page 11; claims 1,5-7,10-13,31,32; example 1 * | 6-13 | |
| P,D, A | EP 1 481 591 A (FRIESLAND BRANDS B.V) 1 December 2004 (2004-12-01) * claims * | 1-13 | |
| D,A | US 4 312 891 A (EISFELDT ET AL) 26 January 1982 (1982-01-26) * column 2, line 37 - column 3, line 8; claims 1-6,8-10; examples 1,5 * * column 5, lines 28-47 * | 1-13 | |
| D,A | WO 81/02377 A (KRAFT INC) 3 September 1981 (1981-09-03) * claims 1,5-7,10-13,15; examples 1,2 * | 1-13 | TECHNICAL FIELDS SEARCHED (Int.Cl.7) A23L A23C |
| D,A | US 3 359 116 A (LITTLE LAWRENCE L) 19 December 1967 (1967-12-19) * column 14, lines 17-21; claims 1,4,7,12,15; example 3 * * column 15, lines 44-56 * * column 17, lines 19-22 * * column 20, lines 16-45 * | 1-13 | |
| D,A | GB 1 476 309 A (UNILEVER LTD) 10 June 1977 (1977-06-10) * claim 1; examples 2,3 * | 1-13 | |

-/--

The present search report has been drawn up for all claims

| Place of search | Date of completion of the search | Examiner |
|---|---|---|
| The Hague | 12 October 2005 | Koch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 07 6512

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | FR 2 346 986 A (GENERAL FOODS LTD) 4 November 1977 (1977-11-04) * examples * | 1-13 | |
| A | US 4 732 772 A (NOLTE ET AL) 22 March 1988 (1988-03-22) * example 1 * * column 4, lines 49-62 * | 1-13 | |
| A | US 3 932 680 A (EGLI ET AL) 13 January 1976 (1976-01-13) * column 6, lines 39-58 * * column 5, lines 16-24 * | 1-13 | |
| A | EP 0 649 599 A (SKW BIOSYSTEMS) 26 April 1995 (1995-04-26) * example 1 * | 1-13 | |
| A | US 3 666 493 A (JOHN A. BLUEMKE) 30 May 1972 (1972-05-30) * column 3, line 1 - column 4, line 8; claims * | 1-13 | TECHNICAL FIELDS SEARCHED (Int.Cl.7) |
| A | US 3 969 534 A (PAVEY ET AL) 13 July 1976 (1976-07-13) * the whole document * | 1-13 | |

The present search report has been drawn up for all claims

| Place of search | Date of completion of the search | Examiner |
|---|---|---|
| The Hague | 12 October 2005 | Koch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 07 6512

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2005

| Patent document cited in search report | | Publication date | Patent family member(s) | | Publication date |
|---|---|---|---|---|---|
| EP 0777969 | A | 11-06-1997 | DE | 69628991 D1 | 14-08-2003 |
| | | | DE | 69628991 T2 | 27-05-2004 |
| | | | DK | 777969 T3 | 20-10-2003 |
| | | | NL | 1001689 C2 | 21-05-1997 |
| WO 8603377 | A | 19-06-1986 | AU | 3744185 A | 01-07-1986 |
| | | | EP | 0204699 A1 | 17-12-1986 |
| | | | JP | 62500909 T | 16-04-1987 |
| EP 1481591 | A | 01-12-2004 | NL | 1023537 C2 | 29-11-2004 |
| US 4312891 | A | 26-01-1982 | NONE | | |
| WO 8102377 | A | 03-09-1981 | CA | 1148021 A1 | 14-06-1983 |
| | | | JP | 2031935 B | 17-07-1990 |
| | | | JP | 57500495 T | 25-03-1982 |
| US 3359116 | A | 19-12-1967 | NONE | | |
| GB 1476309 | A | 10-06-1977 | BE | 819242 A1 | 27-02-1975 |
| | | | DE | 2441643 A1 | 13-03-1975 |
| | | | FI | 254174 A | 01-03-1975 |
| | | | FR | 2242033 A1 | 28-03-1975 |
| | | | NL | 7411546 A | 04-03-1975 |
| | | | SE | 7411042 A | 03-03-1975 |
| FR 2346986 | A | 04-11-1977 | NONE | | |
| US 4732772 | A | 22-03-1988 | NONE | | |
| US 3932680 | A | 13-01-1976 | CA | 1020801 A1 | 15-11-1977 |
| | | | CH | 580920 A5 | 29-10-1976 |
| | | | DE | 2412915 A1 | 03-04-1975 |
| | | | ES | 425126 A1 | 01-06-1976 |
| | | | GB | 1467670 A | 16-03-1977 |
| | | | IT | 1004105 B | 10-07-1976 |
| EP 0649599 | A | 26-04-1995 | DE | 69324490 D1 | 20-05-1999 |
| | | | DE | 69324490 T2 | 23-12-1999 |
| US 3666493 | A | 30-05-1972 | NONE | | |
| US 3969534 | A | 13-07-1976 | CA | 1056197 A1 | 12-06-1979 |

EPO FORM P0459

For more details about this annex : see Official Journal of the European Patent Office, No. 12/82